# FASCICULE DE BREVET EUROPEEN

(11) **EP 2 649 738 B1**
(45) Date de publication et mention de la délivrance du brevet: **15.08.2018**
(21) Numéro de dépôt: 11791554.6
(22) Date de dépôt: 06.12.2011
(51) Int. Cl.: H04H 20/10, H04N 7/24, H04L 29/06, H04N 21/242, H04N 21/24, H04N 21/63, H04N 21/4385, H04N 21/2389

(54) **DISPOSITIF DE SÉLECTION DE FLUX DE SERVICE NUMÉRIQUE, ET PROCÉDÉ, PROGRAMME D'ORDINATEUR ET MOYENS DE STOCKAGE CORRESPONDANTS**
VORRICHTUNG ZUR STREAM-AUSWAHL BEI DIGITALEN DIENSTEN SOWIE VERFAHREN, COMPUTERPROGRAMM UND SPEICHERVORRICHTUNG DAFÜR
DEVICE FOR SELECTING DIGITAL SERVICE STREAMS, AND METHOD, COMPUTER PROGRAM AND STORAGE MEANS CORRESPONDING THERETO

(30) Priorité: 08.12.2010 FR 1060266
(43) Date de publication de la demande: 16.10.2013
(73) Titulaire: Enensys Technologies, 35510 Cesson Sévigné (FR)
(72) Inventeur: POULAIN, Ludovic, 35510 Cesson Sévigné (FR); ROUL, Laurent, 35510 Cesson Sévigné (FR)
(74) Mandataire: Cabinet Le Guen Maillet
(86) Numéro de dépôt international: PCT/EP2011/071838
(87) Numéro de publication internationale: WO 2012/076490

(56) Documents cités:
- FR-A1- 2 936 919
- US-A1- 2003 142 670
- US-A1- 2007 237 185
- US-B1- 6 765 865
- "Digital Video Broadcasting (DVB); Modulator Interface (T2-MI) for a second generation digital terrestrial television broadcasting system (DVB-T2)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.2.1, 1 décembre 2010 (2010-12-01), XP014061858,

## Description

La présente invention concerne le domaine de la diffusion de services numériques à destination de terminaux de restitution de ces services. Plus particulièrement, la présente invention s'intéresse au problème de la fiabilité de la chaîne de diffusion.

Les réseaux de diffusion de services numériques se généralisent. On peut citer par exemple la norme de diffusion de vidéo numérique terrestre DVB-T (*Digital Video Broadcasting* - *Terrestrial* en anglais) : « ETSI EN 300 744 V1.5.1, *Digital Video Broadcasting (DVB) : Framing Structure, Channel Coding and Modulation for Digital Terrestrial Télévision* », et la norme de diffusion de vidéo numérique pour terminaux mobiles DVB-H (*Digital Video Broadcasting* - *Handheld* en anglais) : « ETSI EN 302 304, DVB-H - Transmission System for Handheld Terminais ».

Dans de tels réseaux de diffusion, les services sont encodés individuellement par un ensemble d'encodeurs. Chacun de ces encodeurs dispose des contenus composant le service dont il a la charge. De tels contenus peuvent être composés de séquences vidéo, de séquences audio, de textes ou encore d'applications interactives. En sortie de chaque encodeur, chaque service est disponible sous la forme d'un flux de données numériques composé d'un ensemble de paquets. Ces services sont ensuite multiplexés par un multiplexeur. Cette opération consiste à construire un flux mélangeant les paquets de données des différents services devant être diffusés. Il en résulte un flux de données numériques comportant les données des différents services. Le format de flux de transport MPEG-2 TS (*Moving Picture Experts Group-2 Transport Stream* en anglais) décrit dans le document «ISO/CEI 13818-1, *Generic Coding of Moving Pictures and Associated Audio Information: Systems* », ou le format selon le protocole Internet IP (*Internet Protocol* en anglais), peuvent être utilisés.

Dans le cadre d'une transmission hertzienne, le flux est destiné à être émis sous la forme d'un signal radio par un ou plusieurs modulateurs. Pour ce faire, le flux doit être mis en forme par un module de formatage. Ce formatage peut, par exemple, consister en l'insertion de marques de synchronisation dans le flux, de manière à permettre au(x) modulateur(s) de synchroniser la transmission du signal radio dans le cadre d'une distribution de type SFN (*Single Frequency Network* en anglais ou *Réseau à Fréquence Unique* en français).

Le document de brevet WO 2009/112 371A1 décrit un système de diffusion disposant d'un module de formatage dupliqué. Ce système de diffusion autorise un modulateur à basculer entre les deux flux générés par les deux modules de formatage sans se désynchroniser. Ces modules de formatage sont synchronisés entre eux pour générer des flux synchronisés. Ainsi, un modulateur peut basculer d'un premier flux généré par l'un des modules de formatage vers un second flux généré par l'autre module de formatage, sans qu'une resynchronisation du modulateur ne soit nécessaire. Ainsi, un incident intervenant sur la génération du flux n'entraîne pas systématiquement d'interruption de service.

Cependant, le système de diffusion décrit dans ce document WO 2009/112 371A1 n'est pas adapté à une mise oeuvre dans le cadre d'une diffusion basée sur la norme de diffusion de vidéo numérique terrestre de seconde génération DVB-T2 : « EN 302 755 VI.1.1, *Frame Structure, Channel Coding and Modulation for a Second Generation Digital Terrestrial Télévision Broadcasting System* ». En effet, la synchronisation effectuée entre les flux de transport MPEG2 TS ne permet pas d'éviter une resynchronisation au niveau du modulateur dans ce cadre.

La même problématique se pose dans le cadre d'autres chaînes de diffusion de services numériques, si elles présentent une redondance par utilisation de plusieurs flux de service numérique représentatifs d'un même service numérique, ces flux étant encapsulés dans des flux de transport respectifs.

Le document de brevet US 2007/023185 A1 décrit un système de diffusion de flux multimédia, tel que par exemple des flux vidéo au format MPEG. Une source transmet vers un destinataire deux flux redondants sur deux chemins différents dans un réseau de communication. Ces flux sont reçus par un dispositif de bordure réseau («*Network edge device* » en anglais) pour former un flux unique à adresser au destinataire.

Le document de brevet US 2003/142670 A1 décrit un système de diffusion de flux de données. Le système comporte une pluralité de serveurs redondants transmettant un même flux de données à un ositif de fiabilisation(« *faillover device* » en anglais). Le dispositif de fiabilisation stocke les flux reçus et bascule d'un flux primaire à un flux secondaire en cas de corruption du flux primaire.

Le document de brevet FR 2 936 919 A1 décrit un système de diffusion de services numériques sur une seule fréquence de modulation, où des dispositifs de synchronisation fine sont insérés en amont de points d'émission.

Le document de brevet US 6,765,865 B1 décrit un commutateur qui reçoit deux contenus vidéo identiques via deux entrées respectives. Le commutateur bascule d'un contenu primaire à un contenu secondaire en cas de perturbation ou d'interruption du contenu primaire.

Il est souhaitable de pallier ces différents inconvénients de l'état de la technique.

L'invention concerne un dispositif destiné à être placé en amont d'un modulateur dans une chaîne de diffusion de flux de service numérique, ledit dispositif comprenant des moyens de réception d'une pluralité de flux de transport et des moyens de transmission d'un flux de transport à destination du modulateur, chaque flux de transport encapsulant un flux de service numérique adapté à être diffusé par ledit modulateur, lesdits flux de service numérique étant représentatifs d'un même service numérique, le dispositif étant tel qu'il comporte : des moyens d'extraction de flux de service numérique à partir des flux de transport reçus ; des moyens de détection d'erreur au niveau des flux de transport reçus et/ou au niveau des flux de service numérique extraits ; des moyens d'alignement de flux de service numérique extraits ; des moyens de sélection d'un flux parmi les flux de service numérique alignés, en fonction d'éventuelles erreurs détectées par lesdits moyens de détection ; et, des moyens d'encapsulation du flux de service numérique sélectionné, afin de former ledit flux de transport à transmettre à destination dudit modulateur. Ainsi, on évite une resynchronisation au niveau du modulateur lorsque surviennent des interférences engendrant des erreurs lors du transport des données du service numérique à diffuser.

Selon un mode de réalisation particulier, lesdits moyens d'alignement comportent des moyens de mémorisation des paquets des flux de service numérique extraits en correspondance avec des informations respectives de type de paquet et des valeur respectives d'un compteur de continuité desdits paquets au sein de leurs flux de service numérique respectifs. Ainsi, l'alignement des flux de service numérique est facilité.

Selon un mode de réalisation particulier, lesdits moyens d'alignement comportent des moyens de lecture de paquet mémorisé, et, lesdits moyens étant mis en oeuvre pour lire un paquet d'un flux de service numérique donné, lesdits moyens sont en outre activés pour lire un paquet d'un autre flux de service numérique, si leurs informations respectives de type de paquet et leurs valeurs respectives de compteur de continuité coïncident. Ainsi, l'alignement des flux est réalisé de manière simple par lecture coordonnée de mémoires tampon.

Selon un mode de réalisation particulier, lesdits moyens de mémorisation sont adaptés pour mémoriser les paquets des flux de service numérique extraits en correspondance avec des informations représentatives d'instants auxquels lesdits paquets sont respectivement mémorisés, et lesdits moyens de lecture sont en outre activés en fonction desdites informations. Ainsi, l'encapsulation effectuée par le dispositif pour obtenir un flux de transport destiné au modulateur est asservie sur le cadencement du flux de service numérique sélectionné.

Selon un mode de réalisation particulier, lesdits moyens de lecture sont initialement activés suite à l'expiration d'une temporisation de durée prédéfinie lancée lors de la mémorisation du premier paquet dudit flux. Ainsi, un délai de traitement constant est appliqué par le dispositif.

Selon un mode de réalisation particulier, lesdits moyens de sélection prennent en compte un ordre de priorité prédéfini entre lesdits flux de service numérique alignés. Ainsi, la fiabilité de la transmission du service est renforcée, par exemple en établissant cet ordre de priorité en fonction d'un niveau de robustesse *a priori* des transmissions des flux de transport jusqu'audit dispositif.

L'invention concerne également un système de diffusion de flux de service numérique, ledit système étant destiné à transmettre, à un modulateur, un flux de transport encapsulant un flux de service numérique adapté à être diffusé par ledit modulateur, le système étant tel qu'il comporte un dispositif, tel que mentionné précédemment, dit dispositif de sélection de flux, et au moins un dispositif fournisseur fournissant ladite pluralité de flux de transport audit dispositif de sélection de flux.

Selon un mode de réalisation particulier, le système comporte une pluralité de dispositifs fournisseurs, et lesdits dispositifs fournisseurs comportent : des moyens d'attribution d'un statut de maître à un dispositif fournisseur donné, un statut d'esclave étant attribué à chaque autre dispositif fournisseur ; des moyens respectifs de génération de flux de service numérique, lesdits moyens de génération de chaque dispositif esclave étant asservis temporellement sur ceux du dispositif maître.

L'invention concerne également un procédé mis en oeuvre par un dispositif destiné à être placé en amont d'un modulateur dans une chaîne de diffusion de flux de service numérique, ledit dispositif comprenant des moyens de réception d'une pluralité de flux de transport et des moyens de transmission d'un flux de transport à destination du modulateur, chaque flux de transport encapsulant un flux de service numérique adapté à être diffusé par ledit modulateur, lesdits flux de service numérique étant représentatifs d'un même service numérique, le procédé étant tel qu'il comporte des étapes : d'extraction de flux de service numérique à partir des flux de transport reçus par ledit dispositif ; de détection d'erreur au niveau des flux de transport reçus et/ou au niveau des flux de service numérique extraits ; d'alignement de flux de service numérique extraits ; de sélection d'un flux parmi les flux de service numérique alignés, en fonction d'éventuelles erreurs détectées par lesdits moyens de détection ; d'encapsulation du flux de service numérique sélectionné, afin de former ledit flux de transport à transmettre à destination dudit modulateur.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par un système informatique ou un processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de diffusion de services numériques, dans lequel la présente invention peut être mise en oeuvre ;
- la Fig. 2 illustre schématiquement un premier mode de réalisation d'un module de sélection de flux de données du système de diffusion de la Fig. 1 ;
- la Fig. 3 illustre schématiquement un second mode de réalisation du module de sélection de flux de données du système de diffusion de la Fig. 1 ;
- la Fig. 4 illustre schématiquement un premier algorithme mis en oeuvre par le module de sélection de flux de données du système de diffusion de la Fig. 1 ;
- les Figs. 5a, 5b et 5c illustrent schématiquement un second algorithme mis en oeuvre par le module de sélection de flux de données du système de diffusion de la Fig. 1, selon un mode de réalisation de la présente invention.

De manière à permettre de maintenir la diffusion d'un service numérique, de la redondance est introduite dans la chaîne de diffusion de service numérique en amont du modulateur. Ainsi, plusieurs flux représentatifs du service numérique vont suivre des chemins de transmission différents et apporter de la diversité en entrée du modulateur, afin de permettre, en cas d'erreurs sur un de ces flux, de pouvoir basculer sur un autre de ces flux. Ces flux peuvent être générés par un même dispositif fournisseur, tel qu'une passerelle dans le cadre de la norme DVB-T2, ou par plusieurs dispositifs fournisseurs, tel que plusieurs passerelles en parallèle dans le cadre de la norme DVB-T2. Ces flux sont ainsi générés de sorte d'avoir la même forme d'enveloppe, c'est-à-dire avec des trames T2MI de forme et taille identique dans le cadre de la norme DVB-T2, mais éventuellement des contenus décalés dans le temps. Ces flux sont ensuite encapsulés dans des flux de transport MPEG2 TS respectifs.

Il est proposé de placer un dispositif en amont du modulateur dans la chaîne de diffusion de flux de service numérique. Ce dispositif comprenant des moyens de réception d'une pluralité de flux de transport, chacun encapsulant un flux de service numérique tel que mentionné ci-dessus. Dans le cadre de la norme DVB-T2, ces flux de service numérique sont des flux T2MI. Le dispositif effectue une extraction de flux de service numérique à partir des flux de transport reçus et détecte d'éventuelles erreurs au niveau des flux de transport reçus, c'est-à-dire au niveau MPEG2 TS dans le cadre de la norme DVB-T, et/ou au niveau des flux de service numérique extraits, c'est-à-dire au niveau T2MI (*T2 Modulator Interface* en anglais ou *Interface de Modulateur T2* en français) dans le cadre de la norme DVB-T2. Le dispositif aligne ensuite des flux de service numérique extraits, et sélectionne un flux parmi les flux alignés, en fonction des éventuelles erreurs détectées. Enfin, le dispositif encapsule le flux sélectionné, afin de former le flux de transport à transmettre à destination du modulateur. Lorsque le dispositif détecte par la suite des erreurs dans le flux sélectionné, il sélectionne un autre flux parmi les flux alignés. En d'autres termes, il bascule sur cet autre flux.

La description qui suit s'attache à décrire une mise en oeuvre de la présente invention dans le cadre d'une chaîne de diffusion de services numériques conformément à la norme DVB-T2. D'autres chaînes de diffusion peuvent être utilisées, sans départir du cadre de la présente invention, si elles présentent une redondance par utilisation de plusieurs flux de service numérique représentatifs d'un même service numérique, ces flux étant encapsulés dans des flux de transport respectifs. De plus, la description qui suit s'attache à décrire une mise en oeuvre de la présente invention dans le cadre d'une chaîne de diffusion de services numériques présentant deux dispositifs fournisseurs de ces flux de service numérique représentatifs d'un même service numérique et encapsulés dans des flux de transport respectifs. Comme déjà mentionné, un unique dispositif fournisseur peut être utilisé, sans départir du cadre de la présente invention. De tels dispositifs fournisseurs sont appelés passerelles dans le cadre d'une chaîne de diffusion de services numériques conformément à la norme DVB-T2.

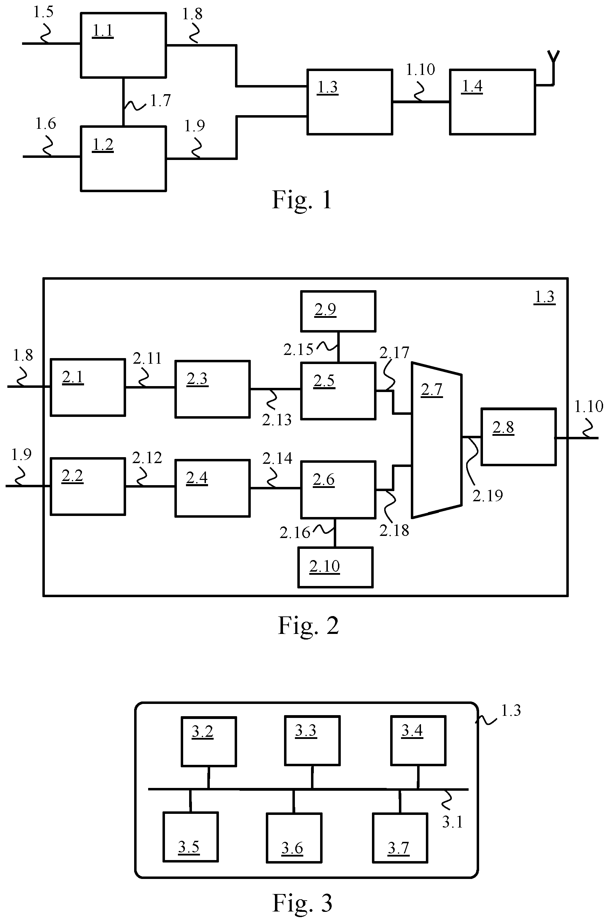

La Fig. 1 illustre schématiquement un système de diffusion de services numériques, dans lequel la présente invention peut être mise en oeuvre. Le système de diffusion présenté à la Fig. 1 est conforme à la norme DVB-T2.

Des services numériques sont reçus sous la forme d'au moins un flux de transport MPEG2 TS, appelé flux TS ou paquets TS par la suite, par des passerelles 1.1 et 1.2 via des liens respectifs 1.5 et 1.6. Le système de diffusion peut comporter un plus grand nombre de passerelles pour fiabiliser la chaîne de diffusion.

Conformément à la norme DVB-T2, chaque passerelle 1.1 et 1.2 construit des trames de bande de base BB (*BaseBand frame* en anglais) à partir de chaque flux TS reçu. La quantité de données utiles dans les trames BB dépend des paramètres de transmission : constellation, taux de codage (*code rate* en anglais), données de correction d'erreur de type FEC (*Forward Error Correction* en anglais), etc. Les passerelles 1.1 et 1.2 encapsulent ensuite les trames BB dans des paquets T2MI. Les passerelles 1.1 et 1.2 génèrent en outre des paquets T2MI de signalisation et des paquets T2MI contenant des informations d'horodatage (*timestamp* en anglais). Plusieurs types de paquets T2MI sont ainsi générés par les passerelles 1.1 et 1.2. Plus précisément, les paquets T2MI sont regroupés par trames de type T2, la période d'une trame T2 étant définie par les paramètres de modulation OFDM (*Orthogonal Frequency Division Multiplexing* en anglais ou *Multiplexage par Division en Fréquences Orthogonales* en français) utilisés. Chaque trame T2 comporte des paquets T2MI contenant des trames BB, puis un paquet T2MI d'informations d'horodatage, puis un paquet T2MI de signalisation. Le paquet T2MI de signalisation contient les informations de type L1, c'est à dire qu'il contient des informations de modulation : bande passante, taille de FFT (*Fast Fourier Transform* en anglais ou *Transformée de Fourier Rapide* en français), etc.

Les informations contenues dans le paquet T2MI d'informations d'horodatage correspondent à une indication de l'instant auquel la supertrame T2, composée d'un nombre prédéfini de trames T2 successives, doit être émise par chaque modulateur dans le cas d'une distribution de type SFN. Les informations d'horodatage peuvent être absolues en utilisant un instant de référence de départ commun ou relatives, par exemple par rapport à un cadencement de type PPS (*Pulse Per Second* en anglais ou *Impulsion Par Seconde* en français). Ces informations d'horodatage ne sont pas significatives dans le cas d'une distribution de type MFN (*Multiple Frequency Network* en anglais ou *Réseau à Multiples Fréquences* en français). Cependant, l'ensemble des modulateurs et passerelles du réseau de diffusion doivent disposer d'une horloge commune, étant donné que la norme DVB-T2 ne permet pas l'adaptation de débit au niveau des modulateurs.

Les passerelles 1.1 et 1.2 encapsulent les paquets T2MI dans des paquets TS afin de permettre le transport des services numériques jusqu'à des modulateurs 1.4 (dont un seul est représenté sur la Fig. 1). Des tables PAT (*Program Association Table* en anglais ou *Table d'Association de Programmes* en français) et PMT (*Program Map Table* en anglais ou *Table de Correspondance de Programmes* en français), et éventuellement des paquets de bourrage, aussi appelés paquets NULL, sont ajoutés afin d'obtenir un flux TS à débit constant et valide du point de vue du rapport ETR 290 : «*Digital Video Broadcasting (DVB) ; Measurement Guidelines for DVB Systems* » et plus particulièrement du paragraphe « *Measurement and Analysis of the MPEG-2 Transport Stream* » de ce rapport. Les passerelles 1.1 et 1.2 effectuent ainsi une adaptation de débit au niveau du flux TS.

Les passerelles 1.1 et 1.2 transmettent les paquets T2MI, encapsulés dans des paquets TS, respectivement via des liens 1.8 et 1.9. Les liens 1.8 et 1.9 peuvent être de nature différente, par exemple le lien 1.8 correspond à une communication satellite et le lien 1.9 correspond à une communication via le réseau Internet. Un module 1.3 de sélection de flux de données reçoit ces paquets T2MI, encapsulés dans des paquets TS, via ces liens 1.8 et 1.9. Ce module 1.3 est en charge de sélectionner dynamiquement un flux parmi ceux issus des passerelles 1.1 et 1.2 et de le fournir au modulateur 1.4 via un lien 1.10.

Lorsque le flux issu de l'une des passerelles 1.1 et 1.2 est interrompu, par exemple suite à une erreur de transmission, le module 1.3 sélectionne le flux issu de l'autre passerelle. Ainsi, un basculement de flux peut s'opérer, lorsque le flux qui était sélectionné jusqu'alors a subi une interruption. Une synchronisation au niveau supertrame T2 est alors requise, ce qui signifie que les supertrames T2 et trames T2 sont émises au même instant et que les valeurs des compteurs de continuité des paquets T2MI émis simultanément par les passerelles sont identiques ; sinon, le passage d'un flux à un autre entraînerait un flux résultant qui est incorrect du point de vue de la norme DVB-T2, la taille d'une trame T2 serait incorrecte par rapport aux informations de type L1 et une discontinuité apparaîtrait au niveau de valeurs de compteurs contenues dans les paquets T2MI. En effet, les paquets T2MI appartenant à une même supertrame T2 doivent contenir une même valeur de compteur. Ainsi lors d'un basculement d'un flux à l'autre, il serait nécessaire que le modulateur 1.4 se resynchronise, ce qui signifie que le service numérique serait suspendu pendant la durée de resynchronisation, qui peut être de plusieurs secondes.

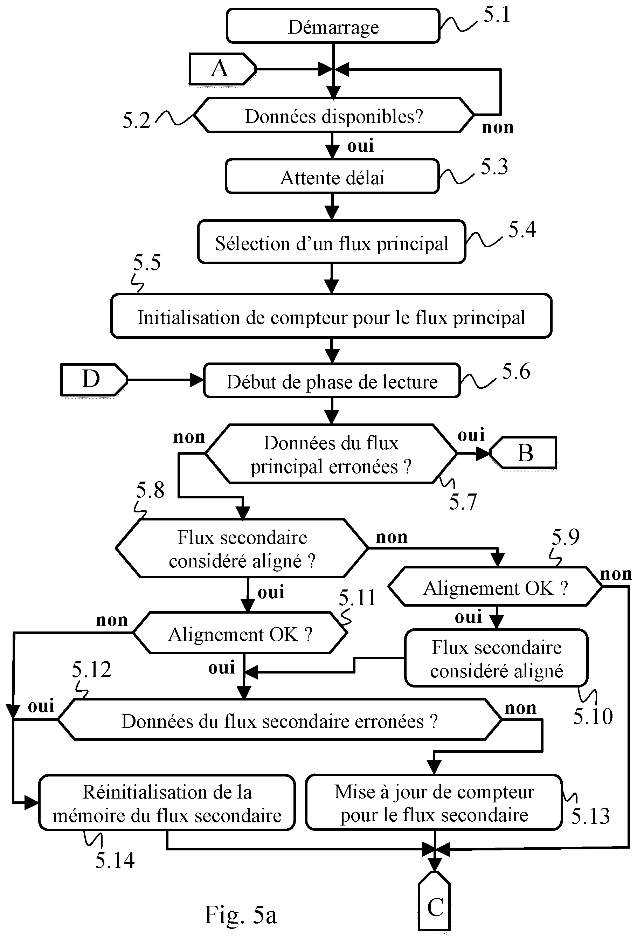

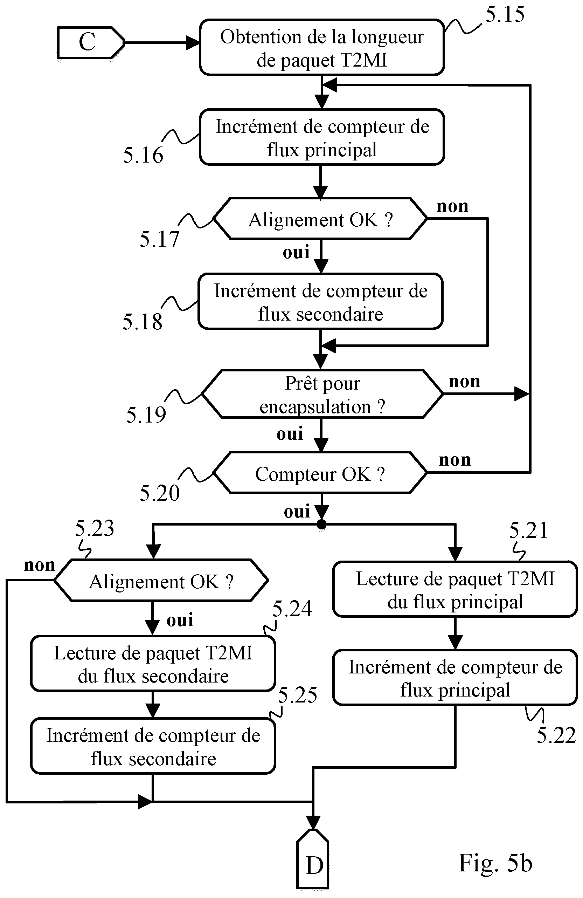

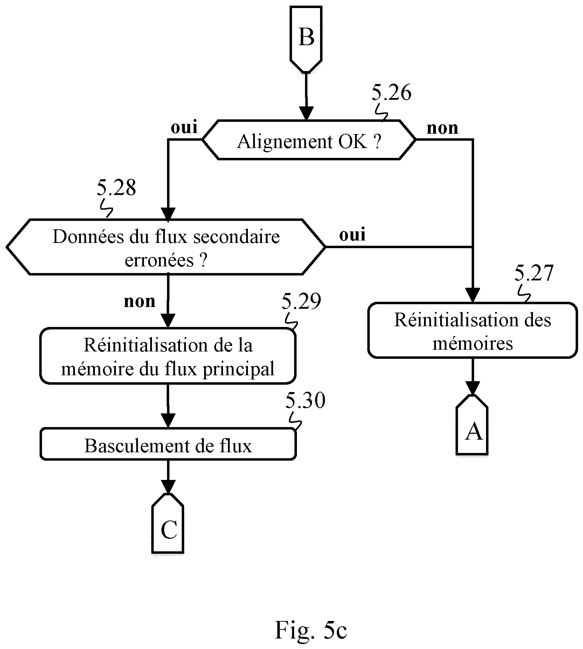

Etant donné que chaque passerelle 1.1 et 1.2 effectue une adaptation de débit au niveau des paquets TS qui n'est pas déterministe, le module 1.3 de sélection de flux de données doit assurer la synchronisation des flux pour permettre d'effectuer le basculement d'un flux à l'autre de manière transparente. Pour ce faire, il effectue un alignement des flux, dont un exemple de réalisation est décrit ci-après en relation avec les Figs. 5a, 5b et 5c.

Les passerelles 1.1 et 1.2 sont synchronisées au niveau trame T2 ou supertrame T2. Les passerelles 1.1 et 1.2 génèrent alors les supertrames T2, et donc les trames T2, aux mêmes instants. Les paquets T2MI d'informations d'horodatage émis à un même instant par les passerelles 1.1 et 1.2 comportent alors les mêmes informations d'horodatage. Cette synchronisation des passerelles 1.1 et 1.2 est obtenue par négociation via un lien 1.7, à latence négligeable vis-à-vis des périodes de trame T2, reliant ces passerelles. Les passerelles 1.1 et 1.2 échangent des messages afin de déterminer à quelle passerelle est attribué le statut de maître, à l'autre passerelle étant alors attribué le statut d'esclave. La passerelle esclave s'asservit alors temporellement sur la passerelle maître, la passerelle maître envoyant à la passerelle esclave, à chaque supertrame T2, les informations d'horodatage de la supertrame T2 courante ainsi que la valeur de compteur de continuité des paquets T2MI de cette supertrame T2.

Au démarrage de la négociation, les passerelles sont considérées comme esclaves, et une passerelle doit être élue comme maître. Chaque passerelle envoie alors à l'autre un message de demande de statut. A la réception d'une demande de statut, la passerelle 1.1 ou 1.2 retourne son statut, celui-ci comprenant une indication de l'état de réception des signaux d'une horloge de référence et de l'état de réception du flux d'entrée. Si une passerelle a l'un de ses signaux d'entrée, flux ou horloge de référence, qui n'est pas reçu correctement, elle prend automatiquement le statut d'esclave. L'autre prend alors le statut de maître. Si chacune des passerelles 1.1 et 1.2 reçoit correctement ses signaux d'entrée, une passerelle maître est par exemple sélectionnée par comparaison d'identifiants, tels que leurs adresses MAC (*Medium Access Control* en anglais ou *Contrôle d'Accès au Support* en français).

Dès que la passerelle maître ne reçoit plus correctement un de ses signaux d'entrée, flux ou horloge de référence, elle prend le statut d'esclave et en informe l'autre passerelle, qui prend alors le statut de maître à la condition que ces signaux d'entrée soient corrects. Dans le cas où chacune des passerelles 1.1 et 1.2 ne reçoit pas correctement ses signaux d'entrée, aucune passerelle n'est en mesure de prendre le statut de maître. Cette situation rare d'erreurs simultanées sur les passerelles 1.1 et 1.2 conduit à une interruption de diffusion de service numérique.

Pour chaque supertrame T2 à transmettre, chacune des passerelles 1.1 et 1.2 détermine les informations d'horodatage associées. La passerelle maître transmet alors à la passerelle esclave un message de synchronisation comportant les informations d'horodatage qu'elle a déterminées, ainsi que la valeur du compteur de continuité des paquets T2MI de cette supertrame T2. La passerelle esclave vérifie si les informations d'horodatage fournies par la passerelle maître coïncident avec celles qu'elle a elle-même déterminées. Il est possible d'autoriser une certaine tolérance de désynchronisation, par exemple de 1 µs. Si les informations d'horodatage diffèrent, la passerelle esclave se resynchronise à la prochaine supertrame T2. Les informations d'horodatage de la prochaine supertrame T2 générée par la passerelle esclave sont alors celles reçues par la passerelle maître auxquelles s'ajoute la durée théorique d'une supertrame T2. La passerelle esclave peut en outre vérifier que la valeur du compteur de continuité des paquets T2MI est identique à celle fournie par la passerelle maître. En cas de différence, le compteur de continuité des paquets T2MI prend la valeur reçue de la passerelle maître, à laquelle est ajouté le nombre de paquets T2MI théoriquement générés durant une supertrame T2.

Les Figs. 2 et 3 illustrent schématiquement, respectivement, un premier et un second mode de réalisation du module 1.3 de sélection de flux de données.

La Fig. 2 correspond à une mise en oeuvre sous forme matérielle du module 1.3 de sélection de flux de données. Le module 1.3 peut alors par exemple prendre la forme d'une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

Le module 1.3 comporte des modules 2.1 et 2.2 d'analyse de conformité au niveau TS, vis-à-vis des recommandations du rapport ETR 290, des flux respectivement reçus via les liens 1.8 et 1.9. Parmi les erreurs pouvant être détectées par les modules 2.1 et 2.2, on peut citer les erreurs de perte de synchronisation du flux TS, les erreurs de table PAT, les erreurs de valeur de compteur de continuité, etc. Si de telles erreurs sont détectées, elles sont remontées jusqu'à un module 2.7 de décision de basculement de flux. Dans un mode de réalisation particulier, le module 1.3 peut être configuré de manière à masquer les erreurs de conformité au niveau TS d'un ou plusieurs types, de sorte qu'elles n'engendrent pas de basculement de flux.

Le module 1.3 comporte en outre des modules 2.3 et 2.4 d'analyse de conformité au niveau T2MI. Ces modules reçoivent respectivement, via des liens 2.11 et 2.12, en provenance des modules 2.1 et 2.2, les flux de données reçus via les liens 1.8 et 1.9, ainsi qu'une indication d'éventuelles erreurs de conformité au niveau TS. Les modules 2.3 et 2.4 extraient les paquets T2MI des flux TS reçus et analysent ensuite la conformité des données au niveau T2MI. Parmi les erreurs pouvant être détectées par les modules 2.3 et 2.4, on peut citer les erreurs de continuité de valeur de compteur T2MI, les erreurs de parité par analyse de champ CRC (*Cyclic Redundancy Code* en anglais ou *Code de Redondance Cyclique* en français), les erreurs de longueur de paquet T2MI, etc. Si de telles erreurs sont détectées, elles sont remontées jusqu'au module 2.7 de décision de basculement de flux. Dans un mode de réalisation particulier, le module 1.3 peut être configuré de manière à masquer les erreurs de conformité au niveau T2MI d'un ou plusieurs types donnés, de sorte qu'elles n'engendrent pas de basculement de flux.

Le module 1.3 comporte en outre des mémoires tampon 2.5 et 2.6 de type FIFO (*First-In First-Out* en anglais ou *Premier Entré Premier Sorti* en français). Les paquets T2MI sont respectivement stockés dans les mémoires tampon 2.5 et 2.6 par les modules 2.3 et 2.4 via des liens 2.13 et 2.14. Chaque paquet T2MI est stocké conjointement avec la valeur de compteur de continuité qui lui est associée, avec une indication concernant le type du paquet T2MI, ainsi que les erreurs, éventuellement détectées par les modules 2.1 et 2.2 d'analyse de conformité au niveau TS et par les modules 2.3 et 2.4 d'analyse de conformité au niveau T2MI. Chaque paquet T2MI est en outre conjointement stocké avec une information représentative de l'instant auquel il est stocké dans la mémoire tampon 2.5 ou 2.6 concernée. Ces informations représentatives des instants auxquels les paquets T2MI sont stockés dans les mémoires tampon 2.5 et 2.6 sont obtenues, via des liens 2.15 et 2.16, auprès de modules 2.9 et 2.10 d'horodatage respectifs. Le module 2.7 de décision de basculement de flux peut accéder aux paquets, et à l'ensemble des informations stockées dans les mémoires tampon 2.5 et 2.6, via des liens 2.17 et 2.18 respectifs.

Le module 2.7 de décision de basculement de flux effectue un alignement des flux de paquets T2MI stockés, et en fonction du résultat de cet alignement et des erreurs éventuellement détectées par les modules 2.1, 2.2, 2.3 et 2.4, il sélectionne des paquets T2MI à transmettre à destination du modulateur 1.4. Un mode de réalisation de l'alignement de flux effectué par le module 2.7 est décrit ci-après en relation avec les Figs. 5a, 5b et 5c.

Le module 1.3 comporte en outre un module 2.8 d'encapsulation TS. Le module 2.8 génère un flux TS à partir des paquets T2MI sélectionnés par le module 2.7, afin de permettre le transport du service numérique jusqu'au modulateur 1.4. Des tables PAT et PMT, et éventuellement des paquets de bourrage, ou paquets NULL, sont ajoutés afin d'obtenir un flux TS à débit constant et valide du point de vue du rapport ETR 290, le débit de ce flux étant asservi sur le flux sélectionné par le module 2.7.

La Fig. 3 correspond à une mise en oeuvre sous forme logicielle du module 1.3 de sélection de flux de données, par exécution d'un ensemble d'instructions par une machine programmable, tel qu'un DSP (*Digital Signal Processor* en anglais ou *Unité de Traitement de Signal Numérique* en français) ou un microcontrôleur. Selon cette réalisation, le module 1.3 comporte, reliés par un bus de communication 3.1 : un processeur, micro-processeur, microcontrôleur ou CPU (*Central Processing Unit* en anglais ou *Unité Centrale de Traitement* en français) 3.2 ; une mémoire vive RAM (*Random Access Memory* en anglais ou *Mémoire à Accès Aléatoire* en français) 3.3 ; une mémoire morte ROM (*Read Only Memory* en anglais ou *Mémoire à Lecture Seule* en français) 3.4 ; un lecteur 3.5 de médium de stockage, tel qu'un lecteur de carte SD (*Secure Digital Card* en anglais ou *Carte Numérique Sécurisée* en français) ; des moyens d'interface 3.6 avec les liens 1.8 et 1.9 ; et des moyens d'interface 3.7 avec le lien 1.10.

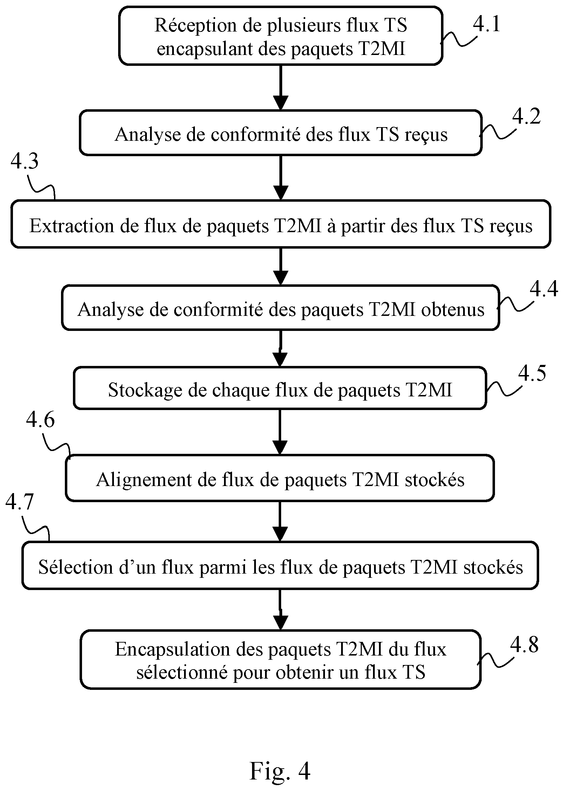

Le microcontrôleur 3.2 est capable d'exécuter des instructions chargées dans la RAM 3.3 à partir de la ROM 3.4, d'un support de stockage, tel qu'une carte SD ou autre, ou d'un réseau de communication (non représenté). Lorsque le module 1.3 est mis sous tension, le microcontrôleur 3.2 est capable de lire de la RAM 3.3 des instructions et de les exécuter. Ces instructions forment un programme d'ordinateur causant la mise en oeuvre, par le microcontrôleur 3.2, de tout ou partie des algorithmes décrits ci-après en relation avec les Figs. 4, 5a, 5b et 5c.

La Fig. 4 illustre schématiquement un algorithme mis en oeuvre par le module 1.3 de sélection de flux de données.

Dans une étape 4.1, le module 1.3 reçoit plusieurs flux TS, chacun encapsulant des paquets T2MI. Dans une étape 4.2 suivante, le module 1.3 effectue une analyse de conformité des flux TS reçus, comme déjà décrit en relation avec la Fig. 3. Dans une étape 4.3 suivante, le module 1.3 extrait des flux de paquets T2MI à partir des flux TS reçus. Dans une étape 4.4 suivante, le module 1.3 effectue une analyse de conformité des flux T2MI extraits, comme déjà décrit en relation avec la Fig. 3. Dans une étape 4.5 suivante, le module 1.3 stocke chaque flux de paquets T2MI dans une mémoire tampon. Chaque paquet T2MI est stocké conjointement avec la valeur de compteur de continuité qui lui est associée, avec une indication concernant le type du paquet T2MI, ainsi que les erreurs éventuellement détectées lors des étapes 4.2 et 4.4. Chaque paquet T2MI est en outre conjointement stocké avec une information représentative de l'instant auquel il est stocké dans la mémoire tampon concernée.

Dans une étape 4.6 suivante, le module 1.3 effectue un alignement de flux de paquets T2MI stockés, et dans une étape 4.7 suivante, sélectionne un flux parmi les flux de paquets T2MI stockés en fonction du résultat de l'alignement effectué et des erreurs éventuellement détectées lors des étapes 4.2 et 4.4. Un mode de réalisation de ces opérations est plus amplement détaillé ci-après en relation avec les Figs. 5a, 5b et 5c.

Dans une étape 4.8 suivante, le module 1.3 effectue une encapsulation des paquets T2MI du flux sélectionné à l'étape 4.7 de manière à obtenir un flux TS. Ce flux TS est alors transmis au modulateur 1.4.

Lors de l'étape 4.7, le module 1.3 sélectionne un flux de paquets T2MI dont les données ne sont pas entachées d'erreurs, qu'elles soient des erreurs au niveau TS ou au niveau T2MI. Si le flux sélectionné jusqu'alors devient entaché d'erreurs, le module 1.3 bascule sur un autre flux, aligné, et qui n'est pas entaché d'erreurs. Les flux étant alignés au niveau T2MI, le basculement n'affecte pas le comportement du modulateur 1.4, qui n'a donc pas besoin de se resynchroniser.

Les Figs. 5a, 5b et 5c illustrent schématiquement un algorithme mis en oeuvre par le module 1.3 et destiné à lui permettre de déterminer, parmi les flux de paquets T2MI stockés, lesquels sont aptes à être transmis à destination du modulateur 1.4, et destiné à lui permettre d'aligner les flux de paquets T2MI stockés et de sélectionner les paquets T2MI à encapsuler en vue de leur transmission au modulateur 1.4. Cet algorithme est, dans le cadre du mode de réalisation décrit en relation avec la Fig. 2, plus particulièrement mis en oeuvre par le module 2.7.

L'algorithme des Figs. 5a, 5b et 5c est détaillé pour gérer deux flux de paquets T2MI, mais son principe peut s'étendre à plus de flux.

L'algorithme démarre, dans une étape 5.1, par une phase d'initialisation. Dans une étape 5.2 suivante, le module 1.3 détermine si des données sont disponibles dans les mémoires tampons dans lesquelles les paquets T2MI sont destinés à être stockés. Si tel est le cas, une étape 5.3 est effectuée, sinon l'étape 5.2 est réitérée. Lorsque l'une des mémoires contenant les paquets T2MI commence à se remplir, le module 1.3 lance une temporisation. Cette temporisation est d'une durée prédéfinie, suffisante pour compenser la gigue (*jitter* en anglais) possible sur chacun des flux TS reçus à l'étape 4.1 et pour compenser le décalage temporel de transmission possible entre les liens 1.8 et 1.9. Dans l'étape 5.3, le module 1.3 se met en attente de l'expiration du délai correspondant à cette temporisation. Une fois la temporisation écoulée, lors d'une étape 5.4, le module 1.3 sélectionne un flux de paquets T2MI stockés à l'étape 4.5 comme flux principal, c'est-à-dire celui qui *a priori* est destiné à être encapsulé pour transmission au modulateur 1.4. L'autre flux est alors sélectionné comme flux secondaire. Dans une étape 5.5 suivante, le module 1.3 initialise un compteur, associé au flux principal, avec une valeur correspondant à l'instant auquel le premier paquet T2MI du flux principal a été stocké dans la mémoire tampon concernée.

Dans une étape 5.6 suivante, le module 1.3 met fin à la phase d'initialisation et débute une phase de lecture de paquet T2MI. Dans une étape 5.7 suivante, le module 1.3 détermine si le flux principal est entaché d'erreurs, qu'elles soient au niveau TS ou au niveau T2MI. Si tel est le cas, le module 1.3 considère que le flux principal n'est pas apte à être transmis au modulateur 1.4 et une étape 5.26 est effectuée (raccord de l'organigramme à l'étiquette B de la Fig. 5c) ; sinon, une étape 5.8 est effectuée.

Dans l'étape 5.8, le module 1.3 détermine si le flux secondaire est considéré comme aligné. Il est à noter que, tant qu'une étape 5.10 décrite ci-après n'est pas effectuée, le flux secondaire n'est pas considéré comme aligné. Si tel est le cas, une étape 5.11 est effectuée ; sinon, une étape 5.9 est effectuée.

Dans l'étape 5.9, le module 1.3 détermine si les conditions pour que le flux secondaire soit considéré comme aligné au flux principal sont remplies, c'est-à-dire si le prochain paquet T2MI à lire pour flux secondaire est de même type et comporte la même valeur de compteur de continuité que le prochain paquet T2MI pour le flux principal. Si tel est le cas, une étape 5.10 est effectuée, dans laquelle le module 1.3 considère que le flux secondaire est aligné, et une étape 5.12 est effectuée ; sinon, une étape 5.15 est effectuée (raccord de l'organigramme à l'étiquette C de la Fig. 5b).

Dans l'étape 5.11, le module 1.3 vérifie si les conditions pour que le flux secondaire soit considéré comme aligné au flux principal sont toujours remplies. Si tel est le cas, l'étape 5.12 est effectuée ; sinon une étape 5.14 est effectuée.

Dans l'étape 5.12, le module 1.3 détermine si le flux secondaire est entaché d'erreurs, qu'elles soient au niveau TS ou au niveau T2MI. Si tel est le cas, le module 1.3 considère que le flux secondaire n'est pas apte à être transmis au modulateur 1.4 et l'étape 5.14 est effectuée ; sinon, une étape 5.13 est effectuée.

Dans l'étape 5.13, le module 1.3 met à jour un compteur associé au flux secondaire en lui donnant une valeur correspondant à l'instant auquel le prochain paquet T2MI du flux secondaire a été stocké dans la mémoire tampon concernée.

Ensuite, l'étape 5.15 est effectuée (raccord de l'organigramme à l'étiquette C de la Fig. 5b).

Dans l'étape 5.14, la mémoire destinée aux paquets T2MI du flux secondaire est réinitialisée, soit parce que le flux secondaire n'est plus aligné, soit parce qu'il contient, ou que le flux TS qui l'encapsulait contenait, des données erronées. Ensuite, l'étape 5.15 est effectuée (raccord de l'organigramme à l'étiquette C de la Fig. 5b).

Dans l'étape 5.15, le module 1.3 obtient la longueur du paquet T2MI à lire. Cette valeur est commune à l'ensemble des flux aptes à être transmis au modulateur 1.4, puisque ceux-ci sont alignés. Dans une étape suivante 5.16, le compteur associé au flux principal est incrémenté. Ce compteur est incrémenté sur la base du rythme de l'horloge qui a servi de référence pour déterminer les instants auxquels les paquets T2MI sont stockés en mémoire tampon. Il est considéré dans l'algorithme des Figs. 5a, 5b et 5c que les étapes comprises entre les étapes 5.6 et 5.15 sont effectuées en un coup de cette horloge.

Dans une étape 5.17 suivante, le module 1.3 détermine si le flux secondaire est considéré comme aligné. Si tel est le cas, une étape 5.18 est effectuée ; sinon, une étape 5.19 est effectuée. Dans l'étape 5.18, le compteur associé au flux secondaire est incrémenté, de la même manière que l'est celui associé au flux principal dans l'étape 5.16. Dans l'étape 5.19 suivante, mise en oeuvre dans le cadre du mode de réalisation décrit en relation avec la Fig. 2, le module 1.3 détermine si le module 2.8 d'encapsulation TS est prêt à recevoir des données. Si tel est le cas, une étape 5.20 est effectuée ; sinon, l'étape 5.16 est à nouveau mise en oeuvre.

Dans une étape 5.20, le module 1.3 détermine si le compteur associé au flux principal a atteint, ou dépassé, une valeur correspondant à l'instant auquel le prochain paquet T2MI à lire pour le flux principal a été stocké en mémoire tampon. Si tel est le cas, des étapes 5.21 et 5.23 sont effectuées ; sinon, l'étape 5.16 est à nouveau mise en oeuvre.

Dans l'étape 5.23 suivante, le module 1.3 détermine si le flux secondaire est considéré comme aligné. Si tel est le cas, une étape 5.24 est effectuée ; sinon, l'étape 5.6 est réitérée (raccord de l'organigramme à l'étiquette D de la Fig. 5a).

Dans l'étape 5.24, le paquet T2MI du flux secondaire est lu au même rythme que l'est le paquet T2MI du flux principal dans l'étape 5.21, mais n'est pas encapsulé ou transmis pour encapsulation. En d'autres termes, ce paquet est supprimé. Dans une étape 5.25 suivante, le compteur associé au flux secondaire est incrémenté, de la même manière qu'il l'est à l'étape 5.18. Ensuite, l'étape 5.6 est réitérée (raccord de l'organigramme à l'étiquette D de la Fig. 5a).

Dans l'étape 5.21, le paquet T2MI du flux principal est lu, et est encapsulé ou transmis pour encapsulation. Il est donc sélectionné pour encapsulation en vue de sa transmission au modulateur 1.4. Dans une étape 5.22 suivante, le compteur associé au flux principal est incrémenté, de la même manière qu'il l'est à l'étape 5.16. Ensuite, l'étape 5.6 est réitérée (raccord de l'organigramme à l'étiquette D de la Fig. 5a), et une nouvelle phase de lecture de paquet T2MI est mise en oeuvre. Au vu des étapes 5.21 et 5.24, la lecture d'un paquet T2MI est alors activée pour lire un paquet d'un autre flux T2MI que le flux principal, c'est-à-dire celui actuellement sélectionné, s'ils sont alignés.

Ainsi, grâce aux compteurs respectivement associés au flux principal et au flux secondaire, ainsi qu'au délai appliqué à l'étape 5.3, un délai de traitement fixe est appliqué par le module 1.3 sur les flux TS. En outre, le flux TS généré par le module 1.3 est asservi sur le flux de paquets T2MI sélectionné.

Dans l'étape 5.26, le module 1.3 détermine si le flux secondaire est considéré comme aligné avec le flux principal, c'est-à-dire si l'étape 5.10 a été préalablement effectuée. Si tel est le cas une étape 5.28 est effectuée ; sinon une étape 5.27 est effectuée. Dans l'étape 5.28, le module 1.3 détermine si le flux secondaire est entaché d'erreurs, qu'elles soient au niveau TS ou au niveau T2MI. Si tel est le cas, le module 1.3 considère que le flux secondaire n'est pas apte à être transmis au modulateur 1.4 et l'étape 5.27 est effectuée ; sinon, une étape 5.29 est effectuée. Dans l'étape 5.27, le flux principal et le flux secondaire étant entachés d'erreurs, les mémoires dans lesquelles sont stockés les paquets T2MI sont réinitialisées, et l'étape 5.2 est réitérée (raccord de l'organigramme à l'étiquette A de la Fig. 5a). Une nouvelle phase d'initialisation est alors mise en oeuvre.

Dans l'étape 5.29, le flux principal étant entaché d'erreurs, la mémoire tampon dans laquelle ses paquets T2MI sont stockés est réinitialisée, et dans une étape 5.30 suivante, un basculement de flux est effectué. Le flux secondaire devient alors le flux principal et le flux principal devient le flux secondaire. Ensuite, l'étape 5.15 est effectuée (raccord de l'organigramme à l'étiquette C de la Fig. 5b).

Dans une variante de réalisation, les flux T2MI sont classés selon un ordre de priorité, par exemple dépendant d'un niveau respectif de robustesse de leur transmission jusqu'au module 1.3. Parmi des flux alignés et non entachés d'erreurs, le flux de priorité la plus grande est sélectionné dans l'étape 4.7. Cela permet de renforcer la fiabilité de la transmission jusqu'au modulateur 1.4, en limitant le risque que le flux sélectionné ne contienne des erreurs, visibles lors de la réception du service, mais qui n'entraînent pas de basculement de flux au sein du module 1.3.

## Revendications

1. Dispositif (1.3) destiné à être placé en amont d'un modulateur (1.4) dans une chaîne de diffusion de flux de service numérique, ledit dispositif comprenant des moyens de réception (1.8;1.9) d'une pluralité de flux de transport conformes à la norme MPEG2 TS et des moyens de transmission (1.10) d'un flux de transport, conforme à la norme MPEG2 TS, à destination du modulateur, chaque flux de transport encapsulant un flux de service numérique adapté à être diffusé par ledit modulateur, lesdits flux de service numérique étant représentatifs d'un même service numérique et comprenant des trames dites T2MI de forme et taille identiques dans le cadre de la norme DVB-T2, **caractérisé en ce qu'**il comporte :
- des moyens d'extraction (2.3;2.4) de flux de service numérique à partir des flux de transport reçus ;
- des moyens de détection (2.1;2.22.3;2.4) d'erreur au niveau des flux de transport reçus et au niveau des flux de service numérique extraits ;
- des moyens d'alignement (2.5;2.6;2.7) de flux de service numérique extraits ;
- des moyens de sélection (2.7) d'un flux parmi les flux de service numérique alignés, en fonction d'éventuelles erreurs détectées par lesdits moyens de détection ;
- des moyens d'encapsulation (2.8) du flux de service numérique sélectionné, afin de former ledit flux de transport à transmettre à destination dudit modulateur.

2. Dispositif selon la revendication 1, **caractérisé en ce que** lesdits moyens d'alignement comportent des moyens de mémorisation (2.5;2.6) des paquets des flux de service numérique extraits en correspondance avec des informations respectives de type de paquet et des valeur respectives d'un compteur de continuité desdits paquets au sein de leurs flux de service numérique respectifs.

3. Dispositif selon la revendication 2, **caractérisé en ce que** lesdits moyens d'alignement comportent des moyens de lecture de paquet mémorisé, et **en ce que**, lesdits moyens étant mis en oeuvre pour lire un paquet d'un flux de service numérique donné, lesdits moyens sont en outre activés pour lire un paquet d'un autre flux de service numérique, si leurs informations respectives de type de paquet et leurs valeurs respectives de compteur de continuité coïncident.

4. Dispositif selon la revendication 3, **caractérisé en ce que** lesdits moyens de mémorisation sont adaptés pour mémoriser les paquets des flux de service numérique extraits en correspondance avec des informations représentatives d'instants auxquels lesdits paquets sont respectivement mémorisés, et **en ce que** lesdits moyens de lecture sont en outre activés en fonction desdites informations.

5. Dispositif selon l'une quelconque des revendications 2 à 4, **caractérisé en ce que** lesdits moyens de lecture sont initialement activés suite à l'expiration d'une temporisation de durée prédéfinie lancée lors de la mémorisation du premier paquet dudit flux.

6. Dispositif selon l'une quelconque des revendications 1 à 5, **caractérisé en ce que** lesdits moyens de sélection prennent en compte un ordre de priorité prédéfini entre lesdits flux de service numérique alignés.

7. Système (1.1,1.2,1.3) de diffusion de flux de service numérique, ledit système étant destiné à transmettre, à un modulateur (1.4), un flux de transport encapsulant un flux de service numérique adapté à être diffusé par ledit modulateur, **caractérisé en ce qu'**il comporte un dispositif (1.3) selon l'une quelconque des revendications 1 à 5, dit dispositif de sélection de flux, et au moins un dispositif fournisseur (1.1;1.2) fournissant ladite pluralité de flux de transport audit dispositif de sélection de flux.

8. Système selon la revendication 7, **caractérisé en ce qu'**il comporte une pluralité de dispositifs fournisseurs, et **en ce que** lesdits dispositifs fournisseurs comportent :
- des moyens d'attribution d'un statut de maître à un dispositif fournisseur donné, un statut d'esclave étant attribué à chaque autre dispositif fournisseur ;
- des moyens respectifs de génération de flux de service numérique, lesdits moyens de génération de chaque dispositif esclave étant asservis temporellement sur ceux du dispositif maître.

9. Procédé mis en oeuvre par un dispositif (1.3) destiné à être placé en amont d'un modulateur (1.4) dans une chaîne de diffusion de flux de service numérique, ledit dispositif comprenant des moyens de réception (1.8;1.9) d'une pluralité de flux de transport conformes à la norme MPEG2 TS et des moyens de transmission (1.10) d'un flux de transport, conforme à la norme MPEG2 TS, à destination du modulateur, chaque flux de transport encapsulant un flux de service numérique adapté à être diffusé par ledit modulateur, lesdits flux de service numérique étant représentatifs d'un même service numérique et comprenant des trames dites T2MI de forme et taille identiques dans le cadre de la norme DVB-T2, **caractérisé en ce qu'**il comporte des étapes :
- d'extraction (4.3) de flux de service numérique à partir des flux de transport reçus par ledit dispositif ;
- de détection (4.2;4.4) d'erreur au niveau des flux de transport reçus et au niveau des flux de service numérique extraits ;
- d'alignement (4.6) de flux de service numérique extraits ;
- de sélection (4.7) d'un flux parmi les flux de service numérique alignés, en fonction d'éventuelles erreurs détectées par lesdits moyens de détection ;
- d'encapsulation (4.8) du flux de service numérique sélectionné, afin de former ledit flux de transport à transmettre à destination dudit modulateur.

10. Programme d'ordinateur **caractérisé en ce qu'**il comprend des instructions pour mettre en oeuvre, par un dispositif destiné à être placé en amont d'un modulateur dans une chaîne de diffusion de flux de service numérique, le procédé selon la revendication 9, lorsque ledit programme est exécuté par un processeur dudit dispositif.

11. Moyens de stockage, **caractérisés en ce qu'**ils stockent un programme d'ordinateur comprenant des instructions pour mettre en oeuvre, par un dispositif destiné à être placé en amont d'un modulateur dans une chaîne de diffusion de flux de service numérique, le procédé selon la revendication 9, lorsque ledit programme est exécuté par un processeur dudit dispositif.

## Patentansprüche

1. Vorrichtung (1.3), die dazu bestimmt ist, vorgelagert vor einem Modulator (1.4) in einer Ausstrahlungskette von digitalen Dienstströmen angeordnet zu werden, wobei die Vorrichtung Mittel zum Empfangen (1.8; 1.9) von mehreren Transportströmen, die mit dem MPEG-2 TS Standard kompatibel sind, und Mittel zum Übertragen (1.10) eines mit dem MPEG-2 TS Standard kompatiblen Transportstroms an den Modulator aufweist, wobei jeder Transportstrom einen digitalen Dienststrom einkapselt, der geeignet ist, von dem Modulator ausgestrahlt zu werden, wobei die digitalen Dienstflüsse für einen gleichen digitalen Dienst repräsentativ sind und sogenannte T2MI-Frames von identischer Form und Größe im Rahmen des DVB-T2-Standards aufweisen, **dadurch gekennzeichnet, dass** sie aufweist:
- Mittel zum Extrahieren (2.3; 2.4) von digitalen Dienstströmen aus den empfangenen Transportströmen;
- Mittel zum Erfassen (2.1; 2.22.3; 2.4) eines Fehlers an den empfangenen Transportströmen und an den extrahierten digitalen Dienstströmen;
- Mittel zum Ausrichten (2.5; 2.6; 2.7) von extrahierten digitalen Dienstströmen;
- Mittel zum Auswählen (2.7) eines Stroms unter den ausgerichteten digitalen Dienstströmen in Abhängigkeit von eventuellen Fehlern, die durch die Mittel zum Erfassen erfasst werden;
- Mittel zum Einkapseln (2.8) des ausgewählten digitalen Dienststroms, um den Transportstrom zu bilden, der an den Modulator zu übertragen ist.

2. Vorrichtung nach Anspruch 1, **dadurch gekennzeichnet, dass** die Mittel zum Ausrichten Mittel zum Speichern (2.5; 2.6) der Pakete der extrahierten digitalen Dienstströme in Übereinstimmung mit jeweiligen Informationen der Art des Pakets und jeweiligen Werten eines Kontinuitätszählers der Pakete in ihren jeweiligen digitalen Dienstströmen aufweisen.

3. Vorrichtung nach Anspruch 2, **dadurch gekennzeichnet, dass** die Mittel zum Ausrichten Mittel zum Lesen des gespeicherten Pakets aufweisen, und dadurch, dass, nachdem die Mittel eingesetzt werden, um ein Paket eines bestimmten digitalen Dienststroms zu lesen, die Mittel ferner aktiviert werden, um ein Paket eines anderen digitalen Dienststroms zu lesen, wenn ihre jeweiligen Informationen der Art des Pakets und ihrer jeweiligen Werte eines Kontinuitätszählers übereinstimmen.

4. Vorrichtung nach Anspruch 3, **dadurch gekennzeichnet, dass** die Mittel zum Speichern geeignet sind, um die Pakete der extrahierten digitalen Dienstströme in Übereinstimmung mit jeweiligen Informationen, die für Augenblicke repräsentativ sind, an denen die Pakete jeweils gespeichert werden, zu speichern, und dadurch, dass die Mittel zum Lesen ferner in Abhängigkeit von den Informationen aktiviert werden.

5. Vorrichtung nach einem der Ansprüche 2 bis 4, **dadurch gekennzeichnet, dass** die Mittel zum Lesen anfänglich infolge des Ablaufs einer Verzögerungszeit von vorbestimmter Dauer, die bei dem Speichern des ersten Pakets des Stroms gestartet wird, aktiviert werden.

6. Vorrichtung nach einem der Ansprüche 1 bis 5, **dadurch gekennzeichnet, dass** die Mittel zum Auswählen ein vorbestimmte Rangfolge zwischen den ausgerichteten digitalen Dienstströmen berücksichtigen.

7. System (1.1, 1.2, 1.3) zum Ausstrahlen von digitalen Dienstströmen, wobei das System dazu bestimmt ist, an einen Modulator (1.4) einen Transportstrom zu übertragen, der einen digitalen Dienststrom einkapselt, der geeignet ist, durch den Modulator ausgestrahlt zu werden, **dadurch gekennzeichnet, dass** es eine Vorrichtung (1.3) nach einem der Ansprüche 1 bis 5 aufweist, wobei die Vorrichtung zum Auswählen von Strömen und mindestens eine Provider-Vorrichtung (1.1; 1.2) der Vorrichtung zum Auswählen von Strömen mehrere Transportströme bereitstellen.

8. System nach Anspruch 7, **dadurch gekennzeichnet, dass** es mehrere Provider-Vorrichtungen aufweist und dadurch, dass die Provider-Vorrichtungen aufweisen:
- Mittel zum Zuweisen eines Master-Status zu einer bestimmten Provider-Vorrichtung, wobei jeder anderen Provider-Vorrichtung ein Slave-Status zugewiesen wird;
- jeweilige Mittel zum Generieren von digitalen Dienstströmen, wobei die Mittel zum Generieren von jeder Slave-Vorrichtung vorrübergehend jenen der Master-Vorrichtung unterworfen sind.

9. Verfahren, das von einer Vorrichtung (1.3) umgesetzt wird, die dazu bestimmt ist, vorgelagert vor einem Modulator (1.4) in einer Ausstrahlungskette von digitalen Dienstströmen angeordnet zu werden, wobei die Vorrichtung Mittel zum Empfangen (1.8; 1.9) von mehreren von Transportströmen, die mit dem MPEG-2 TS Standard kompatibel sind, und Mittel zum Übertragen (1.10) eines mit dem MPEG-2 TS Standard kompatiblen Transportstroms an den Modulator aufweist, wobei jeder Transportstrom einen digitalen Dienststrom einkapselt, der geeignet ist, von dem Modulator ausgestrahlt zu werden, wobei die digitalen Dienstströme für einen gleichen digitalen Dienst repräsentativ sind und sogenannte T2MI-Frames von identischer Form und Größe im Rahmen des DVB-T2-Standards aufweisen, **dadurch gekennzeichnet, dass** es Schritte aufweist:
- des Extrahierens (4.3) von digitalen Dienstströmen aus den von der Vorrichtung empfangenen Transportströmen;
- des Erfassens (4.2; 4.4) eines Fehlers an den empfangenen Transportströmen und an den extrahierten digitalen Dienstströmen;
- des Ausrichtens (4.6) von extrahierten digitalen Dienstströmen;
- des Auswählens (4.7) eines Stroms unter den ausgerichteten digitalen Dienstströmen in Abhängigkeit von eventuellen Fehlern, die durch die Mittel zum Erfassen erfasst sind;
- des Einkapselns (4.8) des ausgewählten digitalen Dienststroms, um den Transportstrom zu bilden, der an den Modulator zu übertragen ist.

10. Computerprogramm, **dadurch gekennzeichnet, dass** es Anweisungen zum Umsetzen durch eine Vorrichtung, die dazu bestimmt ist, vorgelagert vor einem Modulator in einer Ausstrahlungskette von digitalen Dienstströmen angeordnet zu werden, des Verfahrens nach Anspruch 9 aufweist, wenn das Programm von einem Prozessor der Vorrichtung ausgeführt wird.

11. Mittel zum Speichern, **dadurch gekennzeichnet, dass** sie ein Computerprogramm speichern, das Anweisungen zum Umsetzen durch eine Vorrichtung, die dazu bestimmt ist, vorgelagert vor einem Modulator in einer Ausstrahlungskette von digitalen Dienstströmen angeordnet zu werden, des Verfahrens nach Anspruch 9 aufweist, wenn das Programm von einem Prozessor der Vorrichtung ausgeführt wird.

## Claims

1. Device (1.3) intended to be positioned upstream of a modulator (1.4) in a digital service streaming channel, said device comprising means (1.8;1.9) for receiving a plurality of transport streams in accordance with the MPEG2 TS standard and means (1.10) for transmitting a transport stream, in accordance with the MPEG2 TS standard, to the modulator, each transport stream encapsulating a digital service stream capable of being broadcast by said modulator, said digital service streams being representative of one and the same digital service and comprising frames, termed T2MI frames, of identical form and size within the framework of the DVB-T2 standard, **characterized in that** it includes:
- means (2.3;2.4) for extracting digital service streams from the received transport streams;
- means (2.1;2.2;2.3;2.4) for detecting errors in the received transport streams and in the extracted digital service streams;
- means (2.5;2.6;2.7) for aligning extracted digital service streams;
- means (2.7) for selecting one stream from the aligned digital service streams, depending on possible errors detected by said detection means;
- means (2.8) for encapsulating the selected digital service stream, so as to form said transport stream to be transmitted to said modulator.

2. Device according to Claim 1, **characterized in that** said alignment means include means (2.5;2.6) for storing the packets of the extracted digital service streams so as to correspond to respective packet type information and respective values of a continuity counter for said packets within their respective digital service streams.

3. Device according to Claim 2, **characterized in that** said alignment means include stored packet reading means, and **in that**, said means being used to read a packet of a given digital service stream, said means are furthermore activated so as to read a packet of another digital service stream, if their respective packet type information and their respective continuity counter values match.

4. Device according to Claim 3, **characterized in that** said storage means are designed to store the packets of the extracted digital service streams so as to correspond to information representative of instants at which said packets are respectively stored, and **in that** said reading means are furthermore activated depending on said information.

5. Device according to any one of Claims 2 to 4, **characterized in that** said reading means are initially activated following the expiry of a predefined timeout period launched when the first packet of said stream is stored.

6. Device according to any one of Claims 1 to 5, **characterized in that** said selection means take account of a predefined priority order between said aligned digital service streams.

7. Digital service streaming system (1.1,1.2,1.3), said system being intended to transmit, to a modulator (1.4), a transport stream encapsulating a digital service stream capable of being broadcast by said modulator, **characterized in that** it includes a device (1.3) according to any one of Claims 1 to 5, termed stream selection device, and at least one provider device (1.1;1.2) providing said plurality of transport streams to said stream selection device.

8. System according to Claim 7, **characterized in that** it includes a plurality of provider devices, and **in that** said provider devices include:
- means for assigning a master status to a given provider device, a slave status being assigned to each other provider device;
- respective means for generating digital service streams, said generation means of each slave device being controlled in terms of time by those of the master device.

9. Method implemented by a device (1.3) intended to be positioned upstream of a modulator (1.4) in a digital service streaming channel, said device comprising means (1.8;1.9) for receiving a plurality of transport streams in accordance with the MPEG2 TS standard and means (1.10) for transmitting a transport stream, in accordance with the MPEG2 TS standard, to the modulator, each transport stream encapsulating a digital service stream capable of being broadcast by said modulator, said digital service streams being representative of one and the same digital service and comprising frames, termed T2MI frames, of identical form and size within the framework of the DVB-T2 standard, **characterized in that** it includes steps of:
- extracting (4.3) digital service streams from the transport streams received by said device;
- detecting (4.2;4.4) errors in the received transport streams and in the extracted digital service streams;
- aligning (4.6) extracted digital service streams;
- selecting (4.7) one stream from the aligned digital service streams, depending on possible errors detected by said detection means;
- encapsulating (4.8) the selected digital service stream, so as to form said transport stream to be transmitted to said modulator.

10. Computer program, **characterized in that** it comprises instructions for implementing, by way of a device intended to be positioned upstream of a modulator in a digital service streaming channel, the method according to Claim 9 when said program is executed by a processor of said device.

11. Storage means, **characterized in that** they store a computer program comprising instructions for implementing, by way of a device intended to be positioned upstream of a modulator in a digital service streaming channel, the method according to Claim 9 when said program is executed by a processor of said device.
